Europäisches Patentamt

European Patent Office

Office européen des brevets

(19)

(11) Publication number: **0 066 624**
**B1**

(12) **EUROPEAN PATENT SPECIFICATION**

(45) Date of publication of patent specification: **11.06.86**

(51) Int. Cl.⁴: **H 04 H 5/00, H 04 Q 9/10**

(21) Application number: **82900456.3**

(22) Date of filing: **17.12.81**

(86) International application number:
**PCT/US81/01693**

(87) International publication number:
**WO 82/02304 08.07.82 Gazette 82/17**

(54) TONE DETECTOR CIRCUIT.

(30) Priority: **22.12.80 US 218878**

(43) Date of publication of application:
**15.12.82 Bulletin 82/50**

(45) Publication of the grant of the patent:
**11.06.86 Bulletin 86/24**

(84) Designated Contracting States:
**CH DE FR GB LI NL SE**

(56) References cited:
**FR-A-2 205 792**
**GB-A-2 020 132**
**US-A-3 558 911**
**US-A-3 792 290**
**US-A-3 944 749**
**US-A-3 953 832**
**US-A-4 066 848**
**US-A-4 159 398**
**US-A-4 216 463**

**PATENT ABSTRACTS OF JAPAN, vol. 5, no. 86,
June 5, 1981, (E-60) (758)**

(73) Proprietor: **MOTOROLA, INC.**
**1303 East Algonquin Road**
**Schaumburg, Illinois 60196 (US)**

(72) Inventor: **ECKLUND, Lawrence Marvin**
**912 Bridle Lane**
**Wheaton, IL 60187 (US)**

(74) Representative: **Hudson, Peter David et al
Motorola Ltd. Patent and Licensing Operations -
Europe Jays Close Viables Industrial Estate
Basingstoke Hampshire RG22 4PD (GB)**

Courier Press, Leamington Spa, England.

## Description

Background of the Invention

This invention relates to the field of tone detectors and, more particularly, to the use of low frequency tone detectors with stereophonic signals.

Many tone detectors are known which consist mainly of low-pass or bandpass filters, active or passive, with the output rectified to obtain a DC mode-controlling signal. One such system is shown in U.S. Patent No. 4,159,398. The patent discloses AM stereophonic transmission and reception of a signal including a very low frequency stereo presence tone. One problem which can arise with a simple filter/rectifier combination is that false stereo indication signals can be triggered by noise or other signals at or very near the tone frequency. The user of a stereophonic receiver having a falsing problem may see a flickering indicator lamp and hear the audio move back and forth between the "middle" or monophonic position and the separated stereo positions. Any tone detector added to a receiver which includes "scanning" should provide for an early "non-detect" in order to avoid slowing down the scan.

Summary of the Invention

It is, therefore, an object of the present invention to provide a tone detector which is essentially false-free.

It is a particular object to provide a tone detector suitable for use with AM stereophonic receivers.

It is another object to provide the capability of an early "non-detect" of stereophonic signals.

These objects and others which will become apparent are obtained in a circuit for receiving signals which may include one signal of a predetermined, very low frequency. The received signals are filtered to eliminate all signals at frequencies apart from the predetermined frequency. The filter output is coupled to a latching circuit which provides one output signal when a given number of cycles having a given amplitude have been detected in sequence, and a second output signal when a given number of cycles is lacking or of insufficient amplitude.

Brief Description of the Drawing

Fig. 1 is a block diagram of the detector of the invention.

Fig. 2 is a logic diagram of the detector.

Fig. 3 is a timing diagram relating to the operation of the detector.

Fig. 4 is a block diagram illustrating one application of the invention.

Detailed Description of a Preferred Embodiment

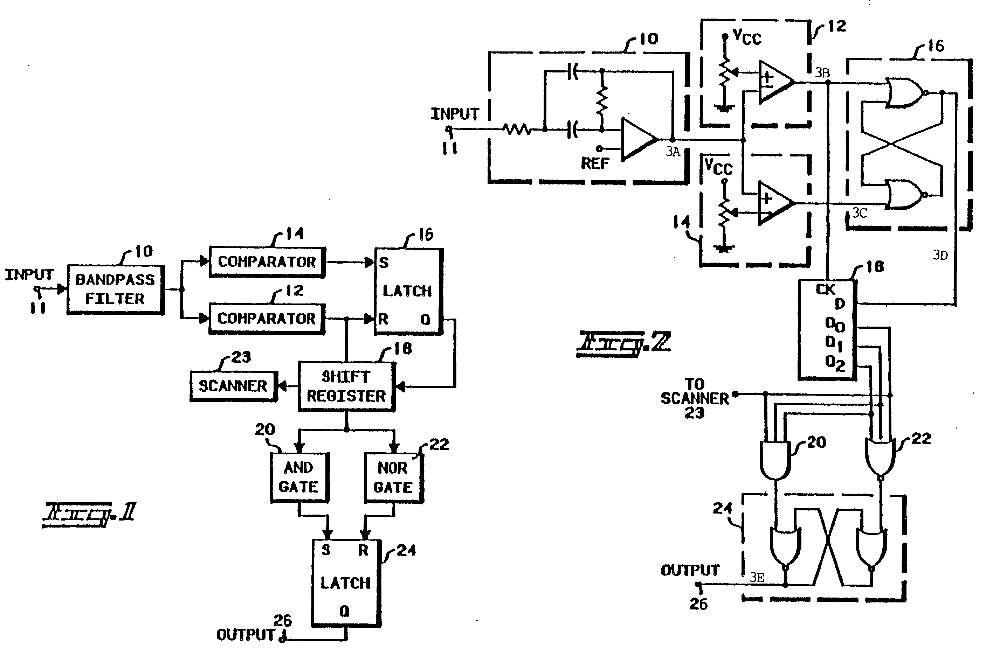

In the block diagram of Fig. 1, the input to a bandpass filter 10 at an input terminal 11 will normally be comprised of a wide range of frequencies. In most applications, these will be audio frequencies including one particular frequency which it is desired to detect for some control purpose. One specific application will be described, namely, an AM stereophonic receiver wherein a pilot tone is included in the received stereo signal, but the invention is not to be construed as limited thereto. It is, in fact applicable to any apparatus wherein it is necessary to not only detect a single frequency in a received signal, but to prevent false detection signals, and to detect when that single frequency fades or disappears for a specified period.

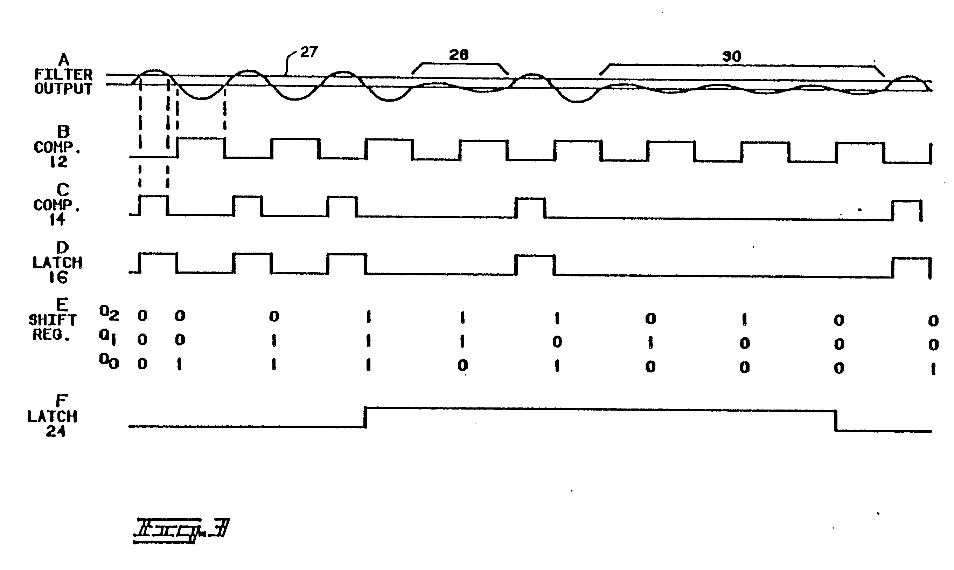

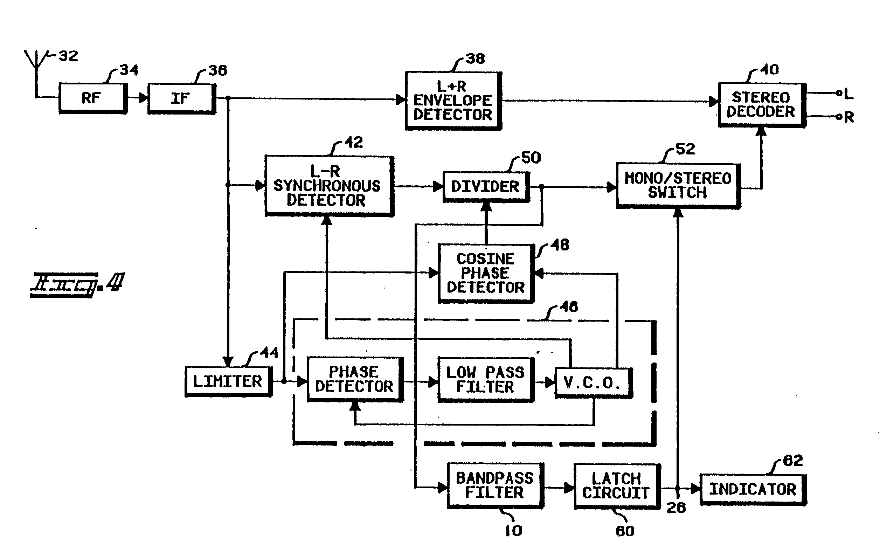

The filter 10 will preferably be a very narrow band-pass filter, although it is possible that a low-pass, high-pass or wider bandpass filter might be used in particular applications. The output of the filter 10 is coupled separately to two comparators 12, 14. The output of the comparator 12 is coupled to the "reset" input of a latch 16 and to a shift register 18. The output of the comparator 14 is coupled to the "set" of the latch 16. The latch 16 output is also coupled to the register 18 and the register outputs are coupled in parallel to two logic gates, an AND gate 20 and a NOR gate 22. At least one output of the register 18 is coupled to a scanner 23 as will be described with relation to Fig. 2. The AND gate 20 output is coupled to the "set" input of a latch 24 and the NOR gate 22 output is coupled to the "reset" input. The latch 24 output is coupled via an output terminal 26 to whatever external circuitry (see Fig. 4) will utilize the signal detection.

Fig. 2 shows in logic/schematic form the detector of Fig. 1 and will be explained in conjunction with the timing chart of Fig. 3. As explained above, the signals at the input 11 of the filter 10 may be comprised of many frequencies, but the filter output signal will be essentially a sine wave (3A), depending on the design of the filter circuit. The maximum amplitude will, of course, vary and may possibly go to zero for short periods. The signal 3A is coupled to the comparators 12, 14 which have differing threshold levels. The threshold for the comparator 12 may be at or near zero so that the comparator functions essentially as a zero crossing detector. Since there will normally be sufficient extraneous signals at or near the tone frequency to trigger the comparator 12, the output (3B) of the comparator will be a fairly regular square wave at the tone frequency. In addition to serving as the reset signal for the latch 16, signal 3B serves as the clock input for the shift register 18.

The threshold for the comparator 14 will preferably be set at some point near but lower than the expected minimum peak amplitude of the tone signal as indicated by the line 27 (Fig. 3). Thus, the output pulses of the comparator 14 (3C) will be narrower than the square pulses of 3B. The latch 16 is then set by the leading edge of 3C and reset by the leading edge of 3B.

The latch 16 output 3D is coupled to the "data" input of the shift register 18. Line 3E shows only three parallel outputs of the register 18 for drawing simplicity, but it is likely that more outputs; e.g., five or six, would be used for practical embodiments. At the first detection of a signal having the proper frequency and amplitude, a "1" would be coupled from the latch 16 to the shift register and, when clocked in, a "1" would appear at the $Q_0$ output of the register for an put of 0—0—1. At the second and third consecutive detects, the register outputs would be 0—1—1 and 1—1—1 respectively. At the third detect, all inputs to the AND gate 20 are 1's, thus a 1 is coupled to the set input of the latch 24 and the latch output at the terminal 26 becomes a 1 as seen in 3F.

If, after latch 24 has been latched, one cycle of the tone signal is missing or of too low a value (as in period 28), one pulse of 3C will be missing and the register 18 outputs will become 1—1—0, but the latch 24 will stay latched. If, however, three pulses of 3C are missing or too low, as in the period 30, the shift register outputs will become 0—0—0. Since the shift register outputs are also the NOR gate 22 inputs, the NOR gate will now output a 1, resetting the latch 24 and causing the latch output to go to 0. The latch 24 output 3F will then stay at 0 until three consecutive cycles have been detected in the filter output signal 3A. It is to be noted that the AND gate 20 and NOR gate 22 need not have the same number of inputs, in other words, the number of consecutive cycles required to set the latch 24 need not necessarily be the same number of missing cycles required to reset the latch 24. It will be seen that, with the exception of the filter circuit 10, there are no capacitors in the device, thus it is very easy to implement as an integrated circuit or as part of a larger IC.

As is known, many present day receiver designs include some form of "scanner" or "seek" tuner whose function is to scan across the desired band, stopping when a suitable signal is detected. If it is desired to stop only for certain signals, such as stereophonic signals, the circuit of Figs. 1 and 2 can provide that function by utilizing the signal at terminal 26. If, however, it is desired to scan the band more rapidly than the multiple detect would allow, it is also possible to use the signal at $Q_0$ of the register 18, or more than one register output, to provide a shorter delay or faster scan. In other words, if the signal at $Q_0$ or at $Q_0$ and $Q_1$ are 0's, the received signal is almost certainly not the desired signal, but if the signal at $Q_0$ is a 1, the scanning circuits would recognize that the received signal could be the desired type of signal (e.g., stereophonic) and would stop scanning long enough to allow the stereo detect signal from the latch 24 to be obtained. If the latch 24 was not latched in an appropriate period of time, scanning would resume as usual.

In one suitable application of the invention, the tone to be detected is a low audio or near infrasonic frequency (20—25 Hz) which has been added to the difference (L—R) channel of an AM stereophonic transmission. The receiver shown in Fig. 4 is similar to the receiver of U.S. Patent No. 4,192,968. That receiver was designed to receive an AM stereo signal of the form $(1 + L + R)$ cos $\phi$ where $\phi$ is arc tan $[(L-R)/(1 + L + R)]$.

In the present receiver, provision has been made for also receiving a stereo signal wherein the signal in the difference channel also includes a stereo presence signal SP, thus $\phi$ is arc tan $[(L - R + SP)/(1 + L + R)]$. The signal received at an antenna 32 is processed in normal fashion in an RF stage 34 and an IF stage 36, and the intermediate frequency signal is coupled to an envelope detector 38. The output (L + R) of the detector 38 is coupled to a stereo decoder 40 which may be a matrixing circuit. The IF signal is also coupled to a synchronous detector 42, the output of which will be essentially (L − R + SP) cos $\phi$, and to a limiter 44 whose output will contain only the phase modulation of the received signal (cos $\omega_c t + \phi$). The limiter output is coupled to a phase locked loop 46 and to a cosine phase detector 48. The PLL 46 output (cos $\omega_c t$) is also coupled to the cosine phase detector 48, and the detector 48 output (cos $\phi$) is coupled to a divider 50 where it is divided into the synchronous detector output (L − R + SP) cos $\phi$. The divider 50 output will then be (L − R + SP) and this signal may be coupled through a mono/stereo switching circuit 52 to the decoder 40 since the very low frequency of the stereo presence tone can be coupled through the audio stages up to and including the speakers if desired. Alternatively the SP signal may be trapped or filtered out of the L − R channel if desired.

The divider output (L − R + SP) is also coupled to the bandpass filter 10 and the filtered output coupled to latch circuit 60, the latter circuit including comparators 12, 14 latches 16, 24 shift register 18 and gates 20, 22. The latch circuit output (3F) at the terminal 26 is coupled to an indicator 62 for a visual indication of the reception of a stereophonic signal, and is also coupled to control the mono/stereo mode switch 52. It is usually desirable to disconnect the difference signal from the matrix when no L − R information is being received. The switch 52 could be a simple voltage controlled switching transistor or a more complex circuit.

Thus, there has been shown and described a circuit for detecting one signal in a group of signals which may have varying amplitudes and frequencies. The circuit is latched when a predetermined number of consecutive cycles of the one signal have been detected, each cycle having a suitable amplitude, and the circuit is delatched only when a predetermined number of consecutive cycles have less than the suitable amplitude. In this circuit, the possibility of a false tone detect is essentially eliminated.

**Claims**

1. Tone detector means including input means (11) for receiving signals which may include one signal of a predetermined frequency and filter means (10) coupled to the input means for outputting only those received signals at or near the predetermined frequency, and characterized in that latching means are coupled to the filter means for providing a first output signal in response to the reception of a first predetermined number of consecutive cycles of said signal frequency, each said cycle having at least a predetermined peak amplitude, and a second output signal in response to the reception of a second predetermined number of consecutive cycles of said signal frequency having an absolute value less than the predetermined peak amplitude, and that a circuit is coupled to the latching means for responding to the first and second output signals.

2. Tone detector means in accordance with claim 1 wherein the signal of a predetermined frequency is a very low audio frequency and the filter means is a low-pass filter.

3. Tone detector means in accordance with claim 1 wherein the filter means is a bandpass filter centered at the predetermined frequency.

4. Tone detector means in accordance with claim 1 and wherein the latching means includes first comparator means (12) having a first detect threshold and coupled to receive the output of the filter means, second comparator means (14) having a second detect threshold, the second threshold being higher than the first threshold, and coupled to receive the output of the filter means, a first latch (16) coupled to be set by the second comparator means and reset by the first comparator means, register means (18) coupled to be clocked by the first comparator means, and with a data input coupled to the first latch, first and second logic gates (20, 22) coupled to receive the register output and second latching means coupled to be set and reset by the respective logic gate outputs.

5. Tone detector means in accordance with claim 1 wherein the responsive means coupled to the latching means includes a switching circuit (52).

6. Tone detector means in accordance with claim 1 wherein the responsive means coupled to the latching means includes an indicator (62).

7. A receiver for receiving a carrier wave which is amplitude modulated with signal information proportional to the sum of first (A) and second (B) intelligence signals and which is also phase modulated with signal information proportional to $A - B + SP$ where SP is the amplitude of a stereo presence indicator signal, the receiver including means (32, 34) for selectively receiving the modulated carrier wave, means (36) for translating the received carrier wave to one of an intermediate frequency; decoding circuitry (38, 40, 42, 44, 46 48, 50) coupled to the translating means for providing output signals which are substantially equal to the first and second intelligence signals, and filter means (10) coupled to the translating means for outputting only those signals at or very near the frequency of said stereo presence indicator signal; and characterized in that latching means (60) are coupled to the filter means for providing a first output signal in response to the reception of a first predetermined number of consecutive cycles of said signal frequency, each said cycle having at least a predetermined peak amplitude, and a second output signal in response to the reception of a second predetermined number of consecutive cycles of said signal frequency having less than the predetermined peak amplitude; and that switching means (52) are coupled to the latching means and to the decoding circuitry for enabling receiver operation in stereophonic and monophonic modes—in response to the first and second latching means output signals respectively.

8. A receiver in accordance with claim 7 and further including indicator means (62) coupled to the latching means for providing first and second indications in response to the first and second output signals respectively.

## Revendications

1. Détecteur de tonalité, incluant un moyen d'entrée (11) pour recevoir des signaux qui peuvent inclure un signal d'une fréquence prédéterminée et un filtre (10) relié au moyen d'entrée pour n'engendrer que les signaux reçus à ou près de la fréquence prédéterminée, caractérisé en ce que des moyens de verrouillage sont reliés au filtre pour fournir un premier signal de sortie en réponse à la réception d'un premier nombre prédéterminé de cycles consécutifs du signal à ladite fréquence, le signal de chaque cycle ayant au moins une amplitude de crête prédéterminée, et un second signal de sortie en réponse à la réception d'un second nombre prédéterminé de cycles consécutifs du signal à ladite fréquence, le signal ayant une valeur absolue inférieure à l'amplitude de crête prédéterminée, et en ce qu'un circuit est relié aux moyens de verrouillage pour répondre aux premier et second signaux de sortie.

2. Détecteur de tonalité selon la revendication 1, caractérisé en ce que le signal d'une fréquence prédéterminé est un signal de très basse audiofréquence et en ce que le filtre est un filtre passe-bas.

3. Détecteur de tonalité selon la revendication 1, caractérisé en ce que le filtre est un filtre passe-bande centré sur la fréquence prédéterminée.

4. Détecteur de tonalité selon la revendication 1, caractérisé en ce que les moyens de verrouillage comprennent un premier comparateur (12) ayant un premier seuil de détection et relié pour recevoir le signal de sortie du filtre, un second comparateur (14) ayant un second seuil de détection, le second seuil étant supérieur au premier seuil, et relié pour recevoir le signal de sortie du filtre, un premier verrou (16) relié pour être positionné ou mis à un par le second comparateur et restauré ou remis à zéro par le premier comparateur, un registre (18) relié pour être rythmé par le premier comparateur, et comportant une entrée de donnée reliée au premier verrou, des première et seconde portes logiques (20, 22) reliées pour recevoir les signaux de sortie de registre et un second verrou relié pour être positionné et restauré par les signaux de sortie de portes logiques respectives.

5. Détecteur de tonalité selon la revendication 1, caractérisé en ce que le moyen de réponse relié aux moyens de verrouillage comprend un circuit de commutation (52).

6. Détecteur de tonalité selon la revendication 1, caractérisé en ce que le moyen de réponse relié aux moyens de verrouillage comprend un indicateur (62).

7. Récepteur pour recevoir une onde porteuse qui est modulée en amplitude, le signal d'information étant proportionnel à la somme des premier (A) et second (B) signaux de message, et qui est modulée en phase, le signal d'information étant proportionnel à (A − B + SP), où SP est l'amplitude d'un signal indicateur de présence stéréo, le récepteur incluant des moyens (32, 34) pour recevoir sélectivement l'onde porteuse modulée, un moyen (36) pour traduire l'onde porteuse reçue en une des fréquences intermédiaires; un circuit de décodage (38, 40, 42, 44, 46, 48, 50) relié au moyen de traduction pour fournir des signaux de sortie qui sont essentiellement égaux aux premier et second signaux de message, et un filtre (10) relié au moyen de traduction pour n'engendrer que les signaux à ou trés près de la fréquence du signal indicateur de présence stéréo; caractérisé en ce que les moyens de verrouillage (60) sont reliés au filtre pour fournir un premier signal de sortie en réponse à la réception d'un premier nombre prédéterminé de cycles consécutifs du signal à ladite fréquence, le signal de chaque cycle ayant au moins une amplitude de crête prédéterminée, et un second signal de sortie en réponse à la réception d'un second nombre prédéterminé de cycles consécutifs du signal à ladite fréquence, le signal de chaque cycle ayant une amplitude inférieure à l'amplitude de crête prédéterminée; et en ce qu'un moyen de commutation (52) est relié aux moyens de verrouillage et au circuit de décodage pour permettre le fonctionnement du récepteur dans les modes stéréophonique et monophonique en réponse respectivement aux premier et second signaux de sortie de moyens de verrouillage.

8. Récepteur selon la revendication 7, caractérisé en ce qu'il comprend en outre un moyen indicateur (62) relié aux moyens de verrouillage pour fournir des première et seconde indications en réponse respectivement aux premier et second signaux de sortie.

**Patentansprüche**

1. Tondetektoreinrichtung, enthaltend eine Eingabeeinrichtung (11) zum Aufnehmen von Signalen, die ein Signal einer vorbestimmten Frequenz enthalten können, und eine Filtereinrichtung (10), die mit der Eingabeeinrichtung verbunden ist, um nur solche empfangenen Signale bei oder nahe der vorbestimmten Frequenz abzugeben, und dadurch gekennzeichnet, daß Verriegelungseinrichtungen mit der Filtereinrichtung verbunden sind, um ein erstes Ausgangssignal in Abhängigkeit vom Empfang einer ersten vorbestimmten Anzahl von aufeinanderfolgenden Zyklen der genannten Signalfrequenz abzugeben, wobei jeder Zyklus wenigstens eine vorbestimmte Spitzenamplitude aufweist, und ein zweites Ausgangssignal in Abhängigkeit vom Empfang einer zweiten vorbestimmten Anzahl aufeinanderfolgender Zyklen jener Signalfrequenz, die einen Absolutwert haben, der geringer als die vorbestimmte Spitzenamplitude ist, abzugeben, und daß ein Kreis mit der Verriegelungseinrichtung verbunden ist, um auf die ersten und zweiten Ausgangssignale anzusprechen.

2. Tondetektoreinrichtung nach Anspruch 1, bei der das Signal einer vorbestimmten Frequenz eine sehr niedrige Tonfrequenz ist und die Filtereinrichtung ein Tiefpaßfilter ist.

3. Tondetektoreinrichtung nach Anspruch 1, bei der die Filtereinrichtung ein Bandpaßfilter ist, dessen Mittenfrequenz auf der vorbestimmten Frequenz liegt.

4. Tondetektoreinrichtung nach Anspruch 1, und bei der die Verriegelungseinrichtung umfaßt: eine erste Komparator-einrichtung (12) mit einem ersten Detektorschwellenwert, die zum Empfang des Ausgangs der Filtereinrichtung geschaltet ist, eine zweite Komparatoreinrichtung (14) mit einem zweiten Detektorschwellenwert, wobei der zweite Schwellenwert höher als der erste Schwellenwert ist, und die zum Empfang des Ausgangs der Filtereinrichtung geschaltet ist, eine erste Verriegelung (16), die dazu geschaltet ist, von der zweiten Komparatoreinrichtung gesetzt und von der ersten Komparatoreinrichtung rückgesetzt zu werden, Registereinrichtungen (18), die dazu geschaltet sind, von der ersten Komparatoreinrichtung getaktet zu werden und mit einem Dateneingang, der mit der ersten Verriegelung verbunden ist, erste und zweite Logiktore (20, 22), die zum Empfang der Registerausgänge geschaltet sind, und zweite Verriegelungseinrichtungen, die dazu geschaltet sind, von den entsprechenden Logiktorausgängen gesetzt und rückgesetzt zu werden.

5. Tondetektoreinrichtung nach Anspruch 1, bei der die ansprechende Einrichtung, die mit den Verriegelungseinrichtungen verbunden ist, einen Schalterkreis (52) enthält.

6. Tondetektoreinrichtung nach Anspruch 1, bei der die ansprechende Einrichtung, die mit den Verriegelungseinrichtungen verbunden ist, einen Indikator (62) enthält.

7. Empfänger zum Empfangen einer Trägerwelle, die mit einer Signalinformation amplitudenmoduliert ist, die proportional der Summe von ersten (A) und zweiten (B) Nachrichtensignalen ist und die auch mit Signalinformation phasenmoduliert ist, die proportional A − B + SP ist, wobei SP die Amplitude eines Stereoanwesenheitsindikatorsignals ist, wobei der Empfänger enthält: Einrichtungen (32, 34) zum selektiven Empfangen der modulierten Trägerwelle, Einrichtungen (36) zum Übersetzen der empfangenen Trägerwelle in eine von einer Zwischenfrequenz; einen Dekoderschaltkreis (38, 40, 42, 44, 46, 48, 50) der mit den Übersetzereinrichtungen verbunden ist, um Ausgangssignale bereitzustellen, die im wesentlichen gleich den ersten und zweiten Nachrichtensignalen sind, und Filtereinrichtungen (10) die mit den Übersetzungseinrichtungen verbunden sind, um nur solche Signale bei oder sehr nahe der Frequenz des Stereoanwesenheitsindikatorsignals abzugeben; und dadurch gekennzeichnet, daß Verriegelungseinrichtungen (60) mit den Filtereinrichtungen verbunden sind, um ein erstes Ausgangssignal in Abhängigkeit vom Empfang einer ersten vorbestimmten Anzahl aufeinanderfolgender Zyklen jener Signalfrequenz zu erzeugen, wobei jeder Zyklus wenigstens eine vorbestimmte Spitzenamplitude aufweist, und um ein zweites Ausgangssignal in Abhängigkeit vom Empfang einer zweiten vorbestimmten Anzahl aufeinanderfolgender Zyklen jener Signalfrequenz abzugeben, die eine geringere als die vorbestimmte Spitzenamplitude haben; und daß Schaltereinrichtungen (52) mit den Verriegelungseinrichtungen und dem Dekoderschaltkreis verbunden sind, um den Empfangsbetrieb in stereophoner oder monauraler Betriebsweise in Abhängigkeit von den Ausgangssignalen der ersten bzw. zweiten Verriegelungseinrichtungen zu ermöglichen.

8. Empfänger nach Anspruch 7 und weiterhin Indikator-Einrichtungen (62) enthaltend, die mit den Verriegelungseinrichtungen verbunden sind, um erste und zweite Anzeigen in Abhängigkeit von den ersten bzw. zweiten Ausgangssignalen zu liefern.

INPUT 11

BANDPASS FILTER 10

COMPARATOR 14

COMPARATOR 12

S LATCH R Q 16

SCANNER 23

SHIFT REGISTER 18

AND GATE 20

NOR GATE 22

S R LATCH Q 24

OUTPUT 26

Fig.1

INPUT 11

REF

V$_{CC}$

V$_{CC}$

10

12

14

16

3A

3B

3C

3D

CK D O$_0$ O$_1$ O$_2$ 18

TO SCANNER 23

20

22

24

OUTPUT 26

3E

Fig.2

0 066 624

0 066 624

A
FILTER
OUTPUT

27    28    30

B
COMP.
12

C
COMP.
14

D
LATCH
16

E
SHIFT
REG.

$Q_2$   0   0   0   1   1   1   0   1   0   0
$Q_1$   0   0   1   1   1   0   1   0   0   0
$Q_0$   0   1   1   1   0   1   0   0   0   1

F
LATCH
24

Fig. 3

FIG. 4